# EUROPEAN PATENT SPECIFICATION

(11) **EP 4 045 405 B1**
(45) Date of publication and mention of the grant of the patent: **15.05.2024**
(21) Application number: 20796902.3
(22) Date of filing: 16.10.2020
(51) Int. Cl.: B64D 11/06, A47C 7/62, A47G 23/02, B60N 3/10

(54) **A DRINK RECEPTACLE HOLDER**
TRINKGEFÄSSHALTER
SUPPORT DE RÉCIPIENT DE BOISSON

(30) Priority: 18.10.2019 GB 201915131
(43) Date of publication of application: 24.08.2022
(73) Proprietor: Safran Seats GB Limited, Cwmbran, Monmouthshire NP44 3HQ (GB)
(72) Inventor: DOHERTY, Ciaran, Lakeside Cwmbran NP44 3HQ (GB)
(74) Representative: Abel & Imray LLP
(86) International application number: PCT/GB2020/052609
(87) International publication number: WO 2021/074638

(56) References cited:
- EP-A1- 2 952 433
- EP-B1- 2 952 433
- FR-A1- 2 612 064
- GB-A- 2 284 052
- US-A- 4 819 843
- US-A- 5 775 654

## Description

### BACKGROUND OF THE INVENTION

The present disclosure relates to drink receptacle holders. The present invention concerns drink receptacle holders.

More particularly, but not exclusively, this invention concerns a drink receptacle holder comprising a drink receptacle retainer portion, for retaining a drink receptacle in an upright orientation, and a mounting portion, for mounting to a mounting structure, wherein the drink receptacle retainer portion and the mounting portion are pivotally mounted to each other such that the orientation of a drink receptacle retained by the drink receptacle retainer portion can be adjusted with respect to the mounting portion.

The invention also concerns an aircraft passenger accommodation unit.

A prior art drinks holder is in the form of a stake, for placing in the ground and for supporting a wine glass in an upright configuration above the ground. The portion of the holder that supports the wine glass is in the form of a simple loop, which is attached to the top of the stake portion. In some examples, the loop is pivotally mounted to the stake portion. In use, the loop portion is at 90 degrees (substantially horizontal) to the stake portion to support the wine glass, while the stake extends from the ground (substantially vertically). When stowed, the loop is pivoted to rest against the stake portion.

Such a wine glass holder is unsuitable for use in an aircraft.

The present invention seeks to mitigate the above-mentioned problems. Alternatively or additionally, the present invention seeks to provide an improved drink receptacle holder and/or aircraft passenger accommodation unit.

FR 2612064 A1 (BISSER) published 16 September 1988 discloses a device which makes it possible to hold a receptacle containing a liquid under heeling and rolling conditions. It consists of a ring split into two with two internal diameters and two dovetail millings with round bottoms, a double-action cardan joint, a cardan support, a cone and two variants for fixing the assembly to the rings.

US 4819843 A (NAKAYAMA) published 11 April 1989 discloses a drink container holder comprising three members: a mounting base having a mounting device for mounting within a vehicle such as an automobile, a holding framework for holding a cup, and an intermediate pivotable framework interposed between the mounting base and the holding framework, the three members being pivotably connected to one another through means of pivotable shaft bearing portions. The mounting device comprises a substantially inverted U-shaped bracket, and the mounting base has dependent bearing portions integrally suspended therefrom. A substantially U-shaped bail member is provided upon the holding framework, and the mounting base, holding framework, and intermediate framework are pivotable with respect to each other about two axes orthogonally arranged with respect to each other such that the three members define in effect gimbal rings for supporting the drink container.

### SUMMARY OF THE INVENTION

The present invention provides, according to a first aspect, a drink receptacle holder comprising a drink receptacle retainer portion, for retaining a drink receptacle in an upright orientation, and a mounting portion, for mounting to a mounting structure, wherein the drink receptacle retainer portion and the mounting portion are pivotally mounted to each other such that the orientation of a drink receptacle retained by the drink receptacle retainer portion can be adjusted with respect to the mounting portion, wherein the drink receptacle retainer portion is freely pivotable in relation to the mounting portion, such that the drink receptacle retainer portion naturally pivots in relation to the mounting portion as the orientation of the mounting portion is changed, wherein the drink receptacle retainer portion comprises a support ring provided around a central point, the support ring being provided on a support member, and wherein the support ring has a gap through a circumferential point of the support ring.

In other words, the drink receptacle retainer portion pivots in relation to the mounting portion under the action of gravity. In other words, the drink receptacle retainer portion pivots in relation to the mounting portion without any user interference.

The drink receptacle retainer portion may naturally pivot in relation to the mounting portion as the orientation of the mounting portion is changed relative to the ground, the horizontal or vertical directions.

The support ring has a gap through a circumferential point of the ring allows a wine glass stem to pass through the support ring so that an upper bowl of the wine glass can then be supported by the inner surface of the support ring.

The drink receptacle retainer portion may be self-levelling, such that a certain angle of movement of the mounting portion can be accommodated such that a drink receptacle can be retained in an upright orientation. This may help to minimise drink spillage from the drink receptacle.

For example, the drink receptacle retainer portion may be able to self-level when the mounting portion is at a first angle (corresponding to an aircraft the mounting portion is attached to being substantially horizontal, for example) and may also be able to self-level when the mounting portion is at a second angle (corresponding to the aircraft being at a 30 degree roll angle to the horizontal, for example). Hence, the self-levelling feature may be able to allow for significant pitch or roll movement of an aircraft.

If the drink receptacle holder is used on an aircraft, it is envisaged that the mounting portion will be attached to the aircraft (for example, by being attached to a mounting structure, such as a meal table or console of an aircraft passenger seat/unit). When an aircraft rolls or pitches, so does the mounting structure in the aircraft, and so does the mounting portion of the drink receptacle holder. However, as the drink receptacle retainer portion can freely pivot in relation to the mounting portion, it can allow for this to retain the drink receptacle in an upright orientation.

The freely pivotable motion may occur when a drink receptacle is retained by the drink receptacle retainer portion. For example, this may be when the mass of the drink receptacle receiver portion, together with the drink receptacle is at a required minimum mass. The minimum mass may correspond to a mass of an empty drink receptacle, such as a wine glass. For example, the minimum mass may be 150g, 200g, 250g or more. The minimum mass may correspond to a mass of a part full drink receptacle, such as a wine glass. For example, the minimum mass may be 250g, 300g, 350g or more. The minimum mass may correspond to a mass of a nearly full drink receptacle, such as a wine glass. For example, the minimum mass may be 300g, 350g, 400g or more.

In any case, the minimum mass required for the freely pivotable motion is a mass at which there is little or no chance of spillage of a drink from the drink receptacle. In other words, this would be a mass at which the amount of drink in the drink receptacle is at a low (or zero) level in the drink receptacle, unlikely to be spilled at expected roll angles (up to about 45 degrees) or pitch angles (up to about 15 degrees) for example.

This is very different to the prior art drink receptacle holders, described above, for use in a garden, for example, comprising a stake, for insertion in the ground, and a wine glass holder loop pivotally mounted to the stake. Here, the wine glass holder is designed to pivot in relation to the stake for stowage purposes, and so requires a relatively strong user force (importantly, stronger than achieved by placing a full glass in the holder) to pivot the holder into the stowed configuration. Here, a freely pivotable motion (between the stake and wine glass holder) would mean that the holder would naturally adopt the stowed configuration, even when it is being used, and so would cause drink spillage and even for the wine glass to fall out of the holder completely. Importantly, this holder is designed for use in the ground, and so the stake, once placed in the ground, is not expected to change orientation.

The pivoting action may be achieved through the use of pins connecting the mounting portion and drink receptacle retainer portion. The axis of rotation between the drink receptacle retainer and mounting portion may be through the pins.

Preferably, the holder further comprises an intermediate portion mounted between the mounting portion and the drink receptacle retainer portion, wherein the intermediate portion is pivotally mounted to the mounting portion and also pivotally mounted to the drink receptacle retainer portion.

More preferably, one or both of the pivotal mountings of the intermediate portion are freely pivotable, such that the intermediate portion is freely pivotable in relation to the mounting portion, or the drink receptacle retainer portion is freely pivotable in relation to the intermediate portion, or the intermediate portion is freely pivotable in relation to the mounting portion and the drink receptacle retainer portion is freely pivotable in relation to the intermediate portion.

Even more preferably, both of the pivotal mountings of the intermediate portion are freely pivotable, such that the intermediate portion is freely pivotable in relation to the mounting portion and the drink receptacle retainer portion is freely pivotable in relation to the intermediate portion.

Preferably, the drink receptacle retainer portion is pivotally mounted with respect to the intermediate portion such that it is pivotable about a first axis of rotation, and wherein the intermediate portion is pivotally mounted with respect to the mounting portion such that it is pivotable about a second axis of rotation, wherein the first and second axes of rotation are at an angle to each other.

This allows more than one degree of freedom of (freely pivotable) movement of the drink receptacle retainer portion in relation to the mounting portion. Hence, when on an aircraft, both changes in pitch and roll angles can be accommodated, for example.

More preferably, the first and second axes of rotation are at an angle to each other between 70 and 110 degrees, and preferably at an angle of approximately 90 degrees. The first and second axes of rotation may be at an angle to each other of between 80 and 100 degrees or maybe between 85 and 95 degrees. The first axis may be contained within a plane of rotation of the second axis and the second axis may be contained within a plane of rotation of the first axis.

This allows the axes to be close to orthogonal. This provides effective movement in the two degrees of freedom. This provides effective allowance for movement of the mounting portion in the two degrees of freedom (pitch and roll, for example).

The first and second axes of rotation may be at an angle to each other of between 80 and 100 degrees or maybe between 85 and 95 degrees.

Preferably, the first axis is contained within a plane of rotation of the second axis and/or the second axis is contained within a plane of rotation of the first axis.

This provides effective two degree of freedom movement between the mounting portion and the drink receptacle retainer portion. This provides effective allowance for movement of the mounting portion in the two degrees of freedom (pitch and roll, for example.)

The first axis may be contained within a plane of rotation of the second axis and the second axis may be contained within a plane of rotation of the first axis.

Preferably, the mounting portion comprises a first part for mounting to the mounting structure and a second part pivotally mounted to the drink receptacle retainer portion, wherein the second part is moveably mounted to the first part.

This allows the drink receptacle retainer portion (and the intermediate portion, if applicable) to be located in a suitable location and/or orientation with respect to the mounting structure.

More preferably, the second part is translatably mounted to the first part.

This allows the drink receptacle retainer portion to be translated to a suitable location with respect to the mounting structure (for example, to put in a suitable location within reach of a passenger).

Preferably, the second part is rotatably mounted to the first part.

This allows the drink receptacle retainer portion to be articulated to a suitable location and/or orientation with respect to the mounting structure.

Preferably, the mounting portion comprises a rail and corresponding runner, slidable along the rail between stowed and deployed positions.

The rail may be considered to be the first part and/or may be attached to an underside of a meal table. The runner may be considered to be the second part and/or may be attached to the drink receptacle retainer portion. This allows the drink receptacle retainer portion location to be adjusted in relation to mounting structure.

Preferably, the mounting portion comprises a bracket and a corresponding bracket member pivotally mounted to the bracket between stowed and deployed positions.

The bracket may be considered to be the first part and/or may be attached to the runner. The bracket member may be considered to be the second part and/or may be attached to the drink receptacle retainer portion. The bracket member may be able to rotate by approximately 90 degrees to the bracket. This allows the drink receptacle retainer portion location and/or orientation to be adjusted in relation to mounting structure. For example, the bracket and bracket member may enable the drink receptacle retainer portion to be moved from an underside of a meal table to above the meal table.

Preferably, the mounting portion comprises a telescopic arm having first and second sub-arms slidable in relation to each other between retracted and extended configurations.

A first sub-arm may be considered to be the first part and/or may be attached to the bracket member. It may be pivotally mounted to the bracket member. The first-sub-arm may be able to rotate by approximately 90 degrees to the bracket member. If combined with the bracket and bracket member, the first sub-arm may be able to rotate approximately 180 degrees in relation to the bracket. The second sub-arm may be considered to be the second part and/or may be attached to the drink receptacle retainer portion. This allows the drink receptacle retainer portion location to be adjusted in relation to mounting structure. In particular, this allows a height or a lateral location of the drink receptacle retainer portion to be adjusted in relation to the mounting structure. For example, the drink receptacle retainer portion may be raised and lowered in relation to a meal table surface.

Preferably, the mounting portion comprises a support arm pivotally mounted to a support arm base between stowed and deployed positions.

The support arm base may be considered to be the first part and/or may be attached to the second sub-arm. The support arm may be considered to be the second part and/or may be attached to the drink receptacle retainer portion. This allows the drink receptacle retainer portion location and/or orientation to be adjusted in relation to mounting structure. In particular, the drink receptacle retainer portion can be supported by the support arm at a suitable angle (for example, approximately 90 degrees) to the support arm base. This may allow the telescopic arm (for example, extending perpendicular to the meal table surface) to adjust a height of the drink receptacle retainer portion above a meal table surface and for the support arm to extend out at an angle of 90 degrees from the telescopic arm (and so be substantially parallel to the meal table surface).

In the above 8 paragraphs, it is noted that the first and second parts of the mounting portion can be construed as different elements of the mounting portion (in between the mounting structure and the drink receptacle retainer portion (or intermediate portion, if applicable). For example, the mounting portion may comprise a rail, corresponding runner and a telescopic arm. Here, the first part could at least be construed as the rail, the runner or the first sub-arm of the telescopic arm. The second part could at least be construed as the runner, the first sub-arm of the telescopic arm or the second sub-arm of the telescopic arm. What is important is that between the mounting structure and the drink receptacle retainer portion (or intermediate portion, if applicable), there is a degree of movement to allow the location and/or orientation of the drink receptacle retainer portion (or intermediate portion, if applicable) to be adjusted in relation to the mounting structure.

It is also noted that any combination of the different moveably mounted elements (e.g. rail and runner, bracket and bracket member, telescopic sub-arms, support arm and base) may be used.

Preferably, the drink receptacle retainer portion comprises a resilient material for retaining the drink receptacle.

For example, the resilient materials may comprise rubber. A resilient material may help to avoid breakage by minimising the impact on the drink receptacle when placed in the drink receptacle retainer portion.

Preferably, the drink receptacle retainer portion comprises a ring member mounted inside a ring member of the mounting portion.

The ring members may be substantially concentrically arranged. This provides a compact arrangement.

More preferably, the intermediate portion comprises a ring member mounted inside the ring member of the mounting portion and wherein the drink receptacle receiver portion ring member is mounted inside the intermediate portion ring member.

The ring members may be substantially concentrically arranged. This provides a compact arrangement.

There may be one or more pins that extend between at least two adjacent ring members at one or more points around the circumference of the ring members. There may be two pins that extend between at least two adjacent ring members at two points around the circumference of the ring members.

The support ring may be provided about a substantially circular shape.

The support ring may comprise a resilient material of the drink receptacle retainer portion, for minimising the impact on the drink receptacle when it is placed on the support ring.

More preferably, the ring of the mounting portion has a gap through a circumferential point of the ring.

This allows a wine glass stem to pass through that ring also.

Even more preferably, the ring of the intermediate portion has a gap through a circumferential point of the ring.

This allows a wine glass stem to pass through that ring also.

The gaps of the different ring member may be substantially aligned with each other. This provides a free path for the wine stem from outside of the outer ring member to the inside the inner ring member.

According to a second aspect of the invention there is also provided an aircraft passenger accommodation unit comprising a seat and a drink receptacle holder as described above.

The unit may comprise a seat and a back of a seat in front that provides the drink receptacle (for example, an economy seat). The drink receptacle may be mounted on a meal table. The meal table may be mounted to the back of a seat in front.

Alternatively, the unit further comprises a console and wherein the drink receptacle holder is mounted to the console. Here, the unit may be a business class or first class seating unit, providing a seat and a console that provides the drink receptacle. The drink receptacle may be mounted on a meal table. The meal table may be mounted to the console. Here, the console is (part of) the mounting structure. The console may be located to the side of the seat.

Preferably, the unit further comprises a meal table and wherein the drink receptacle holder is mounted to the meal table.

Here, the meal table is (part of) the mounting structure. The meal table may be stowable, for example with respect to the seat.

### DESCRIPTION OF THE DRAWINGS

Embodiments of the present invention will now be described by way of example only with reference to the accompanying schematic drawings of which:
Figure 1a shows a plan view of a wine glass support portion of a wine glass holder, according to a first embodiment of the invention, the support portion being in a neutral configuration;
Figure 1b shows a perspective side view of the wine glass support portion of Figure 1a, the support portion being in a roll compensation configuration;
Figure 1c shows a perspective side view of the wine glass support portion of Figures 1a and 1b, the support portion being in a pitch compensation configuration;
Figure 2 shows a perspective view of the wine glass support portion of Figures 1a to 1c embedded within a meal table;
Figure 3a shows a perspective view of the wine glass support portion of Figures 1a to 1c embedded within a tray, the tray being attached to a console of an aircraft passenger accommodation unit, the tray in a deployed position;
Figure 3b shows a perspective view of the accommodation unit of Figure 3a, with the tray in a stowed position;
Figure 4a shows a perspective view of the wine glass support portion of Figures 1a to 1c attached to a support arm structure;
Figure 4b shows a perspective view of the arrangement of Figure 4a, with the support arm structure angled and the wine glass support portion in a roll and pitch compensation configuration;
Figure 5a shows a perspective view of the support arm structure of Figures 4a and 4b attached to a meal table;
Figure 5b shows a perspective view of an underside of the meal table of Figure 5a, the support arm structure being in a stowed configuration;
Figure 5c shows a perspective view of the underside of the meal table of Figures 5a and 5b, the support arm structure being in a partially deployed configuration;
Figure 6a shows a perspective view of a tumbler support portion of a tumbler holder, according to a second embodiment of the invention, the support portion being in a neutral configuration;
Figure 6b shows a plan view of the tumbler support portion of Figure 6a; and
Figure 6c shows a console including two of the tumbler support portions of Figures 6a and 6b.

### DETAILED DESCRIPTION

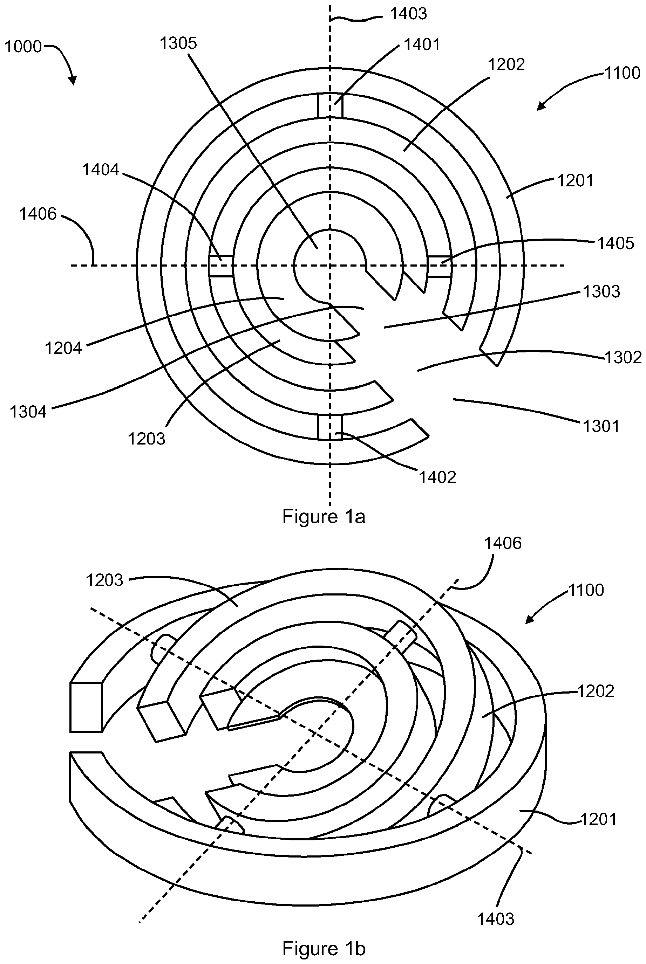

Figure 1a shows a plan view of a wine glass support portion 1100 of a wine glass holder 1000, according to a first embodiment of the invention, the support portion being in a neutral configuration.

The wine glass support portion 1100 comprises three circular rings; an outer ring 1201, a middle ring 1202 located within the outer ring 1201, and an inner ring 1203 located within the middle ring 1202. Each ring 1201, 1202, 1203 is circular in plan view (Figure 1a) but has a rectangular cross-section.

Each of the rings 1201, 1202, 1203 is not in the form of a complete circle (in plan view) but is provided with a gap (1301, 1302, 1303 respectively). These gaps 1301, 1302, 1303 align with each other so that a stem of a wine glass can be passed through the gaps from outside of the outer ring 1201 to the inside of the inner ring 1203, to a central hole 1305 of the portion 1100.

This then allows a bowl of the wine glass to be supported centrally in the wine glass support portion 1100, with the wine glass in an upright orientation.

The middle ring 1202 is mounted to the outer ring 1201 by two pins 1401, 1402. These pins 1401, 1402 are located at opposite sides of the circumference of the rings 1201, 1202 from each other. These pins pivotally mount the middle ring 1202 to the outer ring 1201 so that the middle ring 1202 can pivot in relation to the outer ring 1201 about rotation axis 1403, which passes through the two pins 1401, 1402.

The pins 1401, 1402 are provided with bearings (not shown) such that the pivoting motion is smooth and occurs under the action of gravity.

The inner ring 1203 is mounted to the middle ring 1202 by two pins 1404, 1405. These pins 1404, 1405 are located at opposite sides of the circumference of the rings 1202, 1203 from each other. These pins pivotally mount the inner ring 1203 to the middle ring 1201 so that the inner ring 1203 can pivot in relation to the middle ring 1202 about rotation axis 1406, which passes through the two pins 1404, 1405.

The pins 1404, 1405 are provided with bearings (not shown) such that the pivoting motion is smooth and occurs under the action of gravity.

Importantly, the pins 1404, 1405 and the axis 1406 are orthogonal to the pins 1401, 1402 and axis 1403. This allows the inner ring 1203 to pivot about one axis 1406 in relation to the middle ring 1202 and for the middle ring 1203 to pivot about an axis 1403, orthogonal to axis 1406, in relation to the outer ring 1201. This means that the outer ring 1201 and inner ring 1203 are moveable with respect to each other in two degrees of freedom.

The inner ring 1203 is provided with a rubber impact protector 1204. This is also in the form of a circular ring that is located around an inside surface of the inner ring 1203. The rubber impact protector 1204 is also provided with a gap 1304 that aligns with gaps 1301, 1302, 1303 to allow the wine glass stem to reach the central hole 1305, as described above. The runner impact protector 1204 prevents a wine glass stem from hitting against the inner ring 1203 and protects against knocks and bumps in use. It also supports the bowl of a wine glass when in the support portion 1100 and, because of its rubber surface, helps to grip the wine glass and prevent it sliding out of the holder 1000, for example when experiencing vibration.

The gaps 1301, 1302, 1303, 1304 are located around the circumference of the rings, in between pins 1402 and 1405.

Figure 1b shows a perspective side view of the wine glass support portion 1100 of Figure 1a, the support portion being in a roll compensation configuration.

Here, it can be seen that the inner ring 1203 and middle ring 1202 have not pivoted in relation to each other from the neutral configuration of Figure 1a. In other words, there has been no rotation about axis 1406.

However, the middle ring 1202 (and hence, also the inner ring 1203) has pivoted in relation to the outer ring 1201 about axis 1403.

In Figure 1b, the wine glass support portion 1100 is shown as if the outer ring 1201 is static and the middle 1202 (and inner 1203) rings have moved in relation to it. However, in use on an aircraft, the outer ring 1201 would be attached to an interior part of the aircraft. When the aircraft rolls (rotates about its longitudinal axis), the outer ring 1201 would move with the aircraft. This would cause the middle ring 1202 to pivot in the manner shown in Figure 1b and so be able to keep the inner ring 1203 in the same orientation as it was in the neutral configuration of Figure 1a. Hence, a wine glass supported by the inner ring 1203 would remain in an upright orientation and so prevent drink spillage.

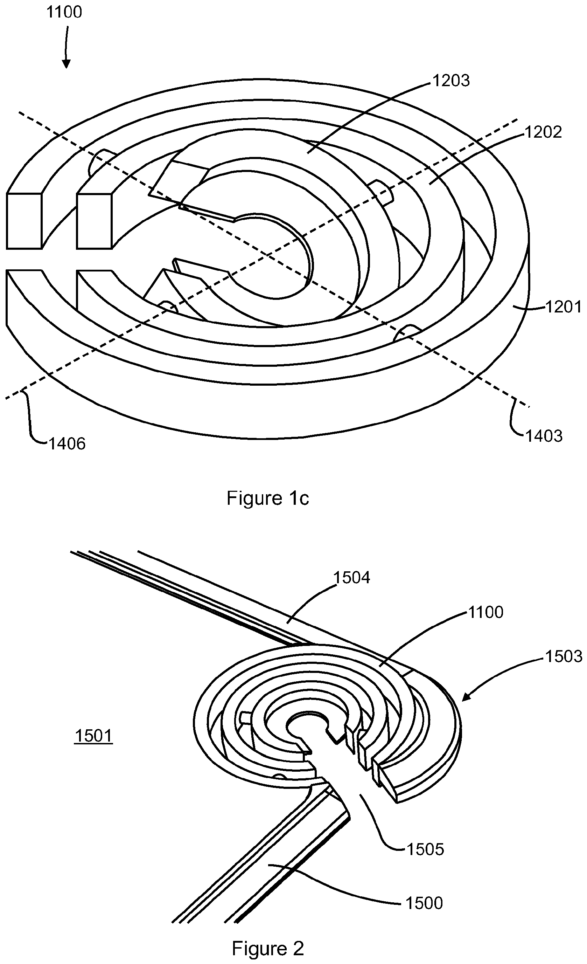

Figure 1c shows a perspective side view of the wine glass support portion 1100 of Figures 1a and 1b, the support portion being in a pitch compensation configuration.

Here, it can be seen that the middle ring 1202 and outer ring 1201 have not pivoted in relation to each other from the neutral configuration of Figure 1a. In other words, there has been no rotation about axis 1403.

However, the inner ring 1203 has pivoted in relation to the middle ring 1202 (and hence, also the outer ring 1201) about axis 1406.

In Figure 1c, like for Figure 1b, the wine glass support portion 1100 is shown as if the outer ring 1201 (and middle ring 1202) is static and the inner 1203 ring has moved in relation to them. However, in use on an aircraft, the outer ring 1201 would be attached to an interior part of the aircraft. When the aircraft pitches (rotates about its transverse axis - i.e. the axis across the width of the aircraft, across the wings), the outer ring 1201 (and middle ring 1202) would move with the aircraft. This would cause the inner ring 1203 to pivot in the manner shown in Figure 1c and so be able to keep the inner ring 1203 in the same orientation as it was in the neutral configuration of Figure 1a. Hence, a wine glass supported by the inner ring 1203 would remain in an upright orientation and so prevent drink spillage.

Of course, the wine glass support portion 1100 is able to have rotation about both axes 1403, 1406 at the same time and so is able to compensate for pitch and roll at the same time.

The rings 1201, 1202, 1203 are able to rotate about the pins 1401, 1402, 1404, 1405 by angles up to 20 degrees in either direction from the neutral configuration. In other words, the rotation of the rings can be up to 20 degrees. Hence pitch angles of up to 20 degrees can be allowed for. This is likely to be sufficient during take-off for example. Also, negative pitch angles of 20 degrees can be allowed for. This is likely to be sufficient for landing, for example. In addition, roll angles (to either side) of up to 20 degrees can be allowed for.

Figure 2 shows a perspective view of the wine glass support portion 1100 of Figures 1a to 1c embedded within a meal table 1500.

This view is from an upper side of the meal table and so the upper surface 1501 of the meal table is shown.

The wine glass support portion 1100 is embedded within the meal table depth, in a far corner 1503 of the meal table 1500, such that the outer ring 1201 is attached around its outer surface to an inside of a hole in the table 1500. The hole is located within a border 1504 of the table 1500. The wine glass support portion 1100 effectively fills the hole.

The border 1504 is provided with a gap 1505 that aligns with the gaps 1301, 1302, 1303 and 1304 so that a wine glass stem can be passed from the far side of the border 1504 to the central hole 1305, as before.

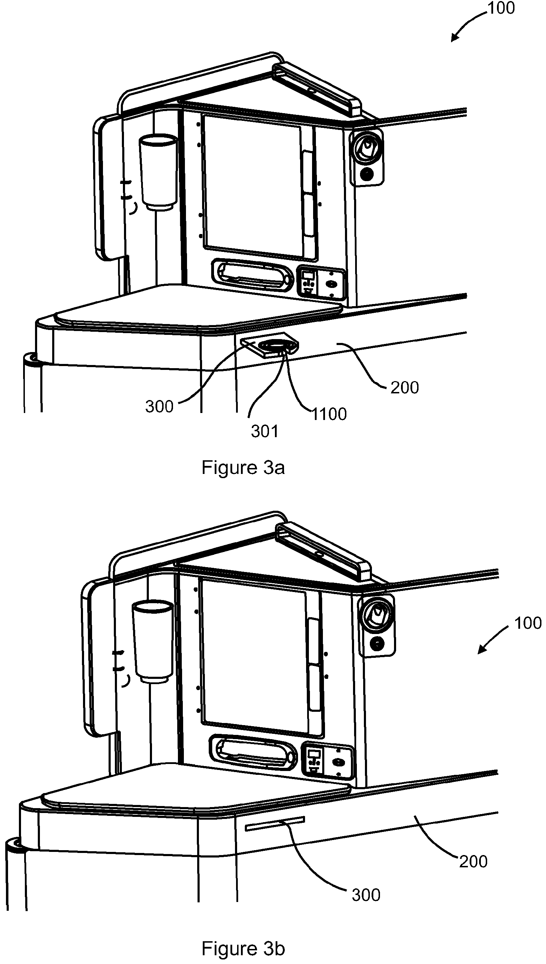

Figure 3a shows a perspective view of the wine glass support portion 1100 of Figures 1a to 1c embedded within a tray 300, the tray being attached to a console 200 of an aircraft passenger accommodation unit 100, the tray in a deployed position.

The wine glass support portion 1100 is embedded within the depth of the tray 300 in a similar way to for the meal table 1500 of Figure 2. A gap in the front of the tray 301 is provided, aligned with the gaps 1301, 1302, 1303 and 1304, so that a wine glass stem can be passed from in front of the tray 300 to the central hole 1305, as before.

Figure 3b shows a perspective view of the accommodation unit 100 of Figure 3a, with the tray 300 in a stowed position. Here the tray 300 has been pushed into the console 200 such that it is flush with the console 200 front surface.

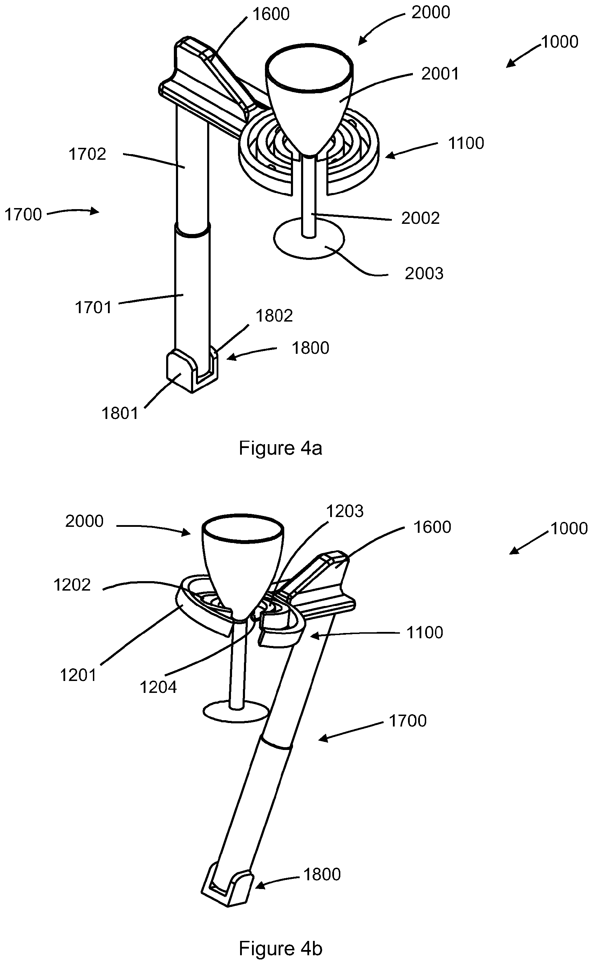

Figure 4a shows a perspective view of the wine glass support portion 1100 of Figures 1a to 1c attached to a support arm structure.

This figure also shows a wine glass 2000 in situ supported by the rubber impact protector 1204 of the wine glass support portion 1100. The wine glass has an upper bowl 2001 (that holds the wine or other drink), a stem 2002 leading from the base of the bowl 2001 to a foot 2003 of the glass 2000.

The outer ring 1201 is pivotally mounted to a cross arm portion 1600. The cross arm portion 1600 is pivotally connected to a telescopic arm 1700. Importantly, this pivotal connection is a stiff connection and so the cross arm portion 1600 is only pivoted in relation to the telescopic arm 1700 under user force. When the support arm structure is deployed, the cross arm portion 1600 is at 90 degrees to the telescopic arm 1700, so that the upright orientation of the supported wine glass 200 is substantially parallel to the telescopic arm 1700.

The telescopic arm has two sub-arms; lower arm 1701 and upper arm 1702 which is slidable in and out of the lower arm 1701. Again, importantly, this slidable connection is a stiff connection and so the upper arm 1702 only slides in relation to the lower arm 1701 under user force.

The lower end of the lower arm 1701 is mounted in a bracket member 1800. The bracket member 1800 comprises two arms 1801, 1802 which extend wither side of the lower end of the lower arm 1701. A pin (not shown) passes between the arms 1801, 1802, though the lower end of the lower arm 1701, thus pivotally mounting the telescopic arm 1700 to the bracket member 1800. Again, this pivotal connection is a stiff connection and so the lower arm 1701 is only pivoted in relation to the bracket member 1800 under user force.

Figure 4b shows a perspective view of the arrangement of Figure 4a, with the support arm structure angled and the wine glass support portion 1100 in a roll and pitch compensation configuration.

Here, the bracket member 1800 (which in use is mounted to an interior part of an aircraft) has been pivoted by the aircraft. This has caused the telescopic arm 1700, cross arm portion 1600 and outer ring 1201 to also move. However, the middle ring 1202 has moved in relation to the outer ring 1201 to allow for roll compensation. In addition, the inner ring 1203 has moved in relation to the middle ring 1202 to allow for pitch compensation. Hence, the wine glass 2000 remains in its upright orientation.

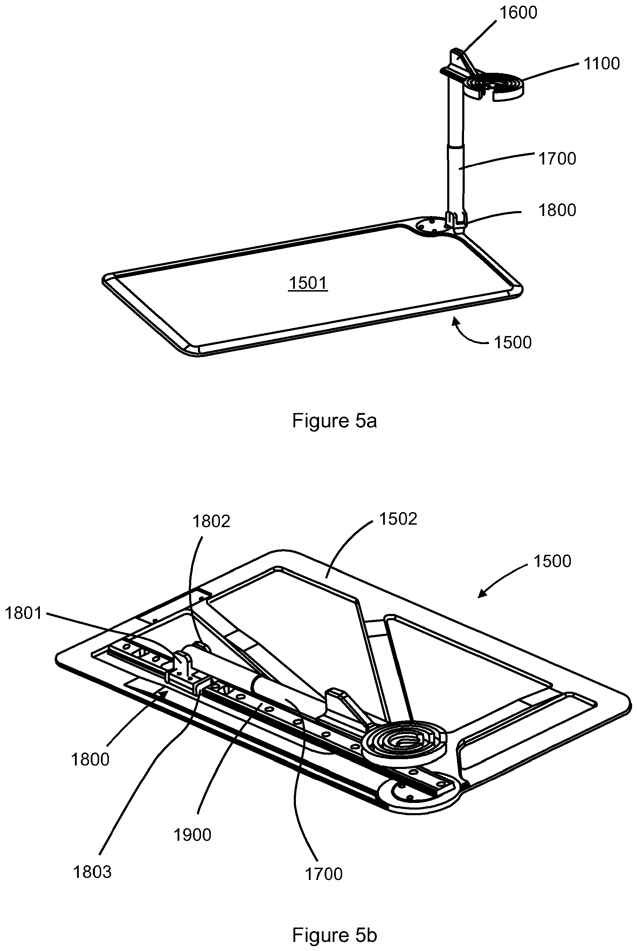

Figure 5a shows a perspective view of the support arm structure of Figures 4a and 4b attached to a meal table 1500, similar to the meal table shown in Figure 2.

here, the support arm structure is in its deployed configuration, with the bracket member 1800 being located to the side of the meal table 1500 such that the telescopic arm 1700 extends up next to the table and a wine glass could be supported by the wine glass support portion 1100 above the upper surface 1501 of the table 1500.

Figure 5b shows a perspective view of an underside 1502 of the meal table 1500 of Figure 5a, the support arm structure being in a stowed configuration.

The underside of the table 1502 has a rail 1900 mounted along a long edge of it. On this rail is a slidable member 1803. Hence, the slidable member 1803 can slide along the rail 1900. The slide member 1803 is part of the bracket member, and hence the bracket member 1800 (and therefore, the telescopic arm 1700, cross arm portion 1600 and wine glass support portion 1100) can be slid along the rail.

As can be seen in this figure, the cross arm portion 1600 has been pivoted by 90 degrees (from the deployed position of Figures 4a, 4b and 5a) in relation to the telescopic arm 1700 so that it lies in the same plane as the arm 1700.

When the holder 1000 is to be deployed, the slidable member 1803 of the bracket member 1800 is slid along the rail 1900 (to the right hand side, as viewed in Figure 5b).

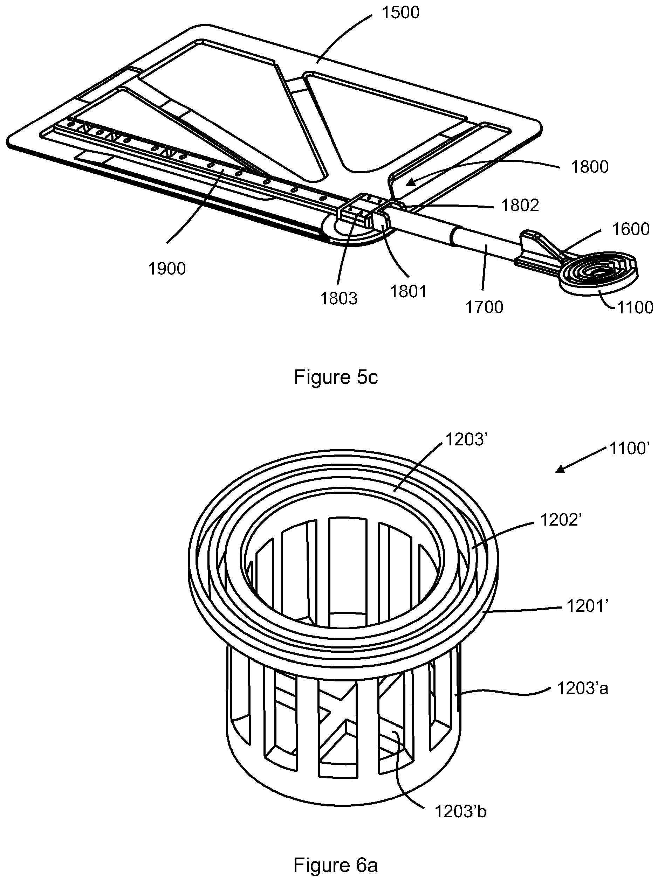

Figure 5c shows a perspective view of the underside 1502 of the meal table 1500 of Figures 5a and 5b, the support arm structure being in a partially deployed configuration.

Here, the slidable member 1803 has been slid along the rail 1900, as described above. In addition, the arms 1801 and 1802 of the bracket have been pivoted in relation to the slidable member 1803 by 90 degrees so that they are facing away from the table 1500, so that they overhang the table. They can then be pivoted by a further 90 degrees to face up in relation to the table 1500, to the position shown in in Figure 5a.

The cross arm portion 1600 can then be pivoted to the deployed positon of Figure 5a.

Of course, in the configurations described, the telescopic arm has been in its extended position (with the upper arm 1702 slid out in relation to the lower arm 1701). However, for any of the configurations, the telescopic arm 1700 could be in a retracted position (with the upper arm 1702 slid in to the lower arm 1701).

Figure 6a shows a perspective view of a tumbler support portion 1100' of a tumbler holder 1000', according to a second embodiment of the invention, the support portion being in a neutral configuration.

The tumbler holder 1000' is very similar to the wine glass holders 1000 previously described, and so only significant differences will be described. Also, the same reference numerals (with a ') will be used for similar or equivalent elements.

Here, instead of just being a ring, the inner ring 1203' is in the form of a cage (or cradle) with a top ring, downwardly extending walls 1203'a and a base 1203'b.

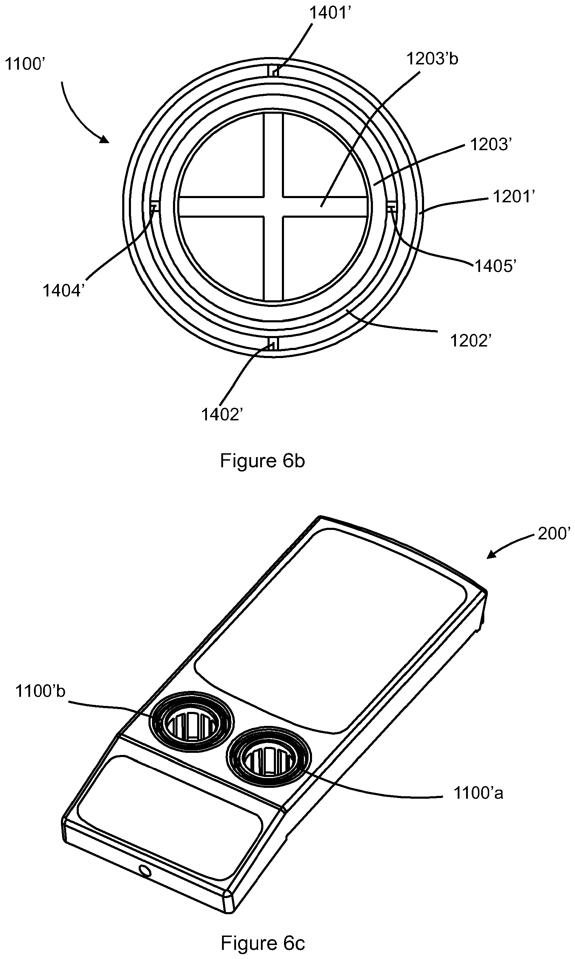

Figure 6b shows a plan view of the tumbler support portion 1100' of Figure 6a.

Here, the pins 1401', 1402', 1404', 1405' similarly provide the same pivotal mountings.

Importantly, there are no gaps in the rings and no rubber impact protector. Instead, the holder is designed to hold a tumbler, by placing the tumbler (from above) into the cage of the inner ring 1203'.

Otherwise, the holder 1000 functions in the same way as before and allows for pitch and roll compensation, as before.

Figure 6c shows a console 200' including two of the tumbler support portions 1100' of Figures 6a and 6b.

Here, the tumbler support portions 1100' are located adjacent each other across a width of the console 200'. They are located in cavities extending downwards from a top surface of the console 200'.

Hence, this console 200' can be used to hold two tumblers (for example, one for each passenger sat either side of the console 200') in a way that compensated for pitch and/or roll movements of an aircraft.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The above examples describe the holder being used to hold a wine glass or a tumbler. Of course, the holder may be suitable for holding any suitable drink receptacle.

The holder may or may not be provided with the various moving parts of the mounting portion. For example, it may or may not have a rail, runner, first sub-arm of the telescopic arm, or second sub-arm of the telescopic arm.

The holder may or may not be mounted in an aircraft and/or to or form part of an aircraft passenger accommodation unit.

The axes 1403, 1406 may or may not be designed to align with the pitch and roll directions. If they do align, this would mean that pure pitch (with no roll) would only cause rotation about one of the axes (and the same for roll). If they do not align, this would mean that pure pitch or roll would cause rotation about both axes 1403, 1406.

The rings (or cages) may be able to rotate by up to any suitable angle in pitch and/or roll. For example, the rings may be able to rotate by up to 30, 40 or 50 degrees in either direction from the neutral configuration, in pitch and/or roll. The rotation angle that is possible may be different for pitch and roll.

The support portion may comprise any suitable shape rings (or cages). For example, instead of being circular the rings (or cages) may be square shaped or may be hexagonal.

The holder may be attachable to a seat divider panel.

The deployment of the holder may be electro-mechanically operated.

Reference should be made to the claims for determining the true scope of the present invention. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments, may not be desirable, and may therefore be absent, in other embodiments.

It should be noted that throughout this specification, "or" should be interpreted as "and/or".

## Claims

1. A drink receptacle holder (1000) for an aircraft passenger accommodation unit (100) comprising:
- a drink receptacle retainer portion (1204), for retaining a drink receptacle in an upright orientation, and
- a mounting portion (1201, 1600, 1700, 1800), for mounting to a mounting structure, wherein the drink receptacle retainer portion (1204) and the mounting portion (1201, 1600, 1700, 800) are pivotally mounted to each other such that the orientation of a drink receptacle retained by the drink receptacle retainer portion can be adjusted with respect to the mounting portion,
wherein the drink receptacle retainer portion (1204) is freely pivotable in relation to the mounting portion (1201, 1600, 1700, 1800), such that the drink receptacle retainer portion naturally pivots in relation to the mounting portion as the orientation of the mounting portion is changed;
wherein the drink receptacle retainer portion (1204) comprises a support ring (1203) provided around a central point, the support ring being provided on a support member, and
wherein the support ring (1203) has a gap (1303) through a circumferential point of the support ring.

2. A drink receptacle holder (1000) as claimed in any preceding claim, wherein the mounting portion (1201, 1600, 1700, 1800) comprises a first part for mounting to the mounting structure (1201) and a second part (1600, 1700, 1800) pivotally mounted to the drink receptacle retainer portion (1204), wherein the second part is translatably mounted to the first part.

3. A drink receptacle holder (1000) as claimed in claim 2, wherein the second part (1600, 1700, 1800) is rotatably mounted to the first part (1201).

4. A drink receptacle holder (1000) as claimed in claim 2 or 3, wherein the mounting portion comprises a rail (1900) and corresponding runner (1803), slidable along the rail between stowed and deployed positions.

5. A drink receptacle holder (1000) as claimed in any of claims 2 to 4, wherein the mounting portion comprises a telescopic arm (1700) having first and second sub-arms (1701, 1702) slidable in relation to each other between retracted and extended configurations.

6. A drink receptacle holder (1000) as claimed in any preceding claim, wherein the drink receptacle retainer portion (1204) comprises a resilient material for retaining the drink receptacle.

7. A drink receptacle holder (1000) as claimed in any preceding claim, wherein the drink receptacle retainer portion (1204) comprises a ring member mounted inside a ring member of the mounting portion (1201).

8. A drink receptacle holder (1000) as claimed in claim 7 further comprising an intermediate portion (1202) mounted between the mounting portion (1201) and the drink receptacle retainer portion (1204),
wherein the intermediate portion (1202) is pivotally mounted to the mounting portion (1201) and also pivotally mounted to the drink receptacle portion (1204),
wherein the intermediate portion (1202) comprises a ring member mounted inside the ring member of the mounting portion (1201), and
wherein the drink receptacle receiver portion ring member (1204) is mounted inside the intermediate portion ring member.

9. A drink receptacle holder as claimed in claim 10, when dependent on claim 7, wherein the ring of the mounting portion (1201) has a gap through a circumferential point of the ring (1301).

10. A drink receptacle holder (1000) as claimed in any preceding claim, when dependent on claim 8, wherein the ring of the intermediate portion (1202) has a gap through a circumferential point of the ring (1302).

11. An aircraft passenger accommodation unit (100) comprising a seat and a drink receptacle holder (1000) according to any preceding claim.

12. An aircraft passenger accommodation unit (100) as claimed in claim 11, further comprising a console (200) and wherein the drink receptacle holder (1000) is mounted to the console.

13. An aircraft passenger accommodation unit (100) as claimed in claim 11, further comprising a meal table (1500) and wherein the drink receptacle holder (1000) is mounted to the meal table.

## Patentansprüche

1. Trinkgefässhalter (1000) für eine Flugzeugpassagier-Platzeinheit (100), umfassend:
- einen Trinkgefäss-Halteabschnitt (1204) zum Halten eines Trinkgefässes in einer aufrechten Position, und
- einen Befestigungsabschnitt (1201, 1600, 1700, 1800) zur Befestigung an einer Befestigungsstruktur,
wobei der Trinkgefäss-Halteabschnitt (1204) und der Befestigungsabschnitt (1201, 1600, 1700, 800) schwenkbar zueinander befestigt sind, so dass die Ausrichtung eines durch den Trinkgefäss-Halteabschnitt gehaltenen Trinkgefässes in Bezug auf den Befestigungsabschnitt eingestellt werden kann,
wobei der Trinkgefäss-Halteabschnitt (1204) in Bezug auf den Befestigungsabschnitt (1201, 1600, 1700, 1800) frei schwenkbar ist, so dass der Trinkgefäss-Halteabschnitt natürlich in Bezug auf den Befestigungsabschnitt schwenkt, wenn die Ausrichtung des Befestigungsabschnitts geändert wird;
wobei der Trinkgefäss-Halteabschnitt (1204) einen Stützring (1203) aufweist, der um einen zentralen Punkt herum vorgesehen ist, wobei der Stützring auf einem Stützelement vorgesehen ist und
wobei der Stützring (1203) eine Aussparung (1303) durch eine Umfangsstelle des Stützrings aufweist.

2. Trinkgefässhalter (1000) nach einem der vorhergehenden Ansprüche, wobei der Befestigungsabschnitt (1201, 1600, 1700, 1800) einen ersten Teil zur Befestigung an dem Befestigungsabschnitt (1201) und einen zweiten Teil (1600, 1700, 1800) aufweist, der schwenkbar an dem Trinkgefäss-Halteabschnitt (1204) befestigt ist, wobei der zweite Teil verschiebbar zum ersten Teil befestigt ist.

3. Trinkgefässhalter (1000) nach Anspruch 2, wobei der zweite Teil (1600, 1700, 1800) drehbar zum ersten Teil (1201) angebracht ist.

4. Trinkgefässhalter (1000) nach Anspruch 2 oder 3, wobei der Befestigungsabschnitt eine Schiene (1900) und einen entsprechenden Schieber (1803) umfasst, der entlang der Schiene zwischen einer eingefahrenen und einer ausgefahrenen Position verschiebbar ist.

5. Trinkgefässhalter (1000) nach einem der Ansprüche 2 bis 4, wobei der Befestigungsabschnitt einen Teleskoparm (1700) mit einem ersten und einem zweiten Hilfsarm (1701, 1702) umfasst, die zwischen einer eingefahrenen und einer ausgefahrenen Konfiguration zueinander verschiebbar sind.

6. Trinkgefässhalter (1000) nach einem der vorhergehenden Ansprüche, wobei der Trinkgefäss-Halteabschnitt (1204) ein elastisches Material zum Halten des Trinkgefässes aufweist.

7. Trinkgefässhalter (1000) nach einem der vorhergehenden Ansprüche, wobei der Trinkgefäss-Halteabschnitt (1204) ein Ringelement umfasst, das innerhalb eines Ringelements des Befestigungsabschnitts (1201) angebracht ist.

8. Trinkgefässhalter (1000) nach Anspruch 7, ferner umfassend einen Zwischenabschnitt (1202), der zwischen dem Befestigungsabschnitt (1201) und dem Trinkgefäss-Halteabschnitt (1204) angebracht ist,
wobei der Zwischenabschnitt (1202) schwenkbar an dem Befestigungsabschnitt (1201) befestigt ist und auch schwenkbar an dem Trinkgefäss-Halteabschnitt (1204) befestigt ist,
wobei der Zwischenabschnitt (1202) ein Ringelement umfasst, das innerhalb des Ringelements des Befestigungsabschnitts (1201) angebracht ist, und
wobei das Ringelement des Trinkgefäss-Halteabschnitts (1204) innerhalb des Ringelements des Zwischenabschnitts angebracht ist.

9. Trinkgefässhalter nach Anspruch 10, wenn von Anspruch 7 abhängig, wobei der Ring des Befestigungsabschnitts (1201) eine Aussparung durch eine Umfangsstelle des Rings (1301) aufweist.

10. Trinkgefässhalter (1000) nach einem der vorhergehenden Ansprüche, wenn von Anspruch 8 abhängig, wobei der Ring des Zwischenabschnitts (1202) eine Aussparung durch eine Umfangsstelle des Rings (1302) aufweist.

11. Flugzeugpassagier-Platzeinheit (100) mit einem Sitz und einem Trinkgefässhalter (1000) nach einem der vorhergehenden Ansprüche.

12. Flugzeugpassagier-Platzeinheit (100) nach Anspruch 11, ferner umfassend eine Konsole (200), und wobei der Trinkgefässhalter (1000) an der Konsole befestigt ist.

13. Flugzeugpassagier-Platzeinheit (100) nach Anspruch 11, ferner umfassend einen Tisch für Mahlzeiten (1500), und wobei der Trinkgefässhalter (1000) am Tisch für Mahlzeiten befestigt ist.

## Revendications

1. Support de porte-boisson (1000) pour une unité d'hébergement de passagers d'avion (100) comprenant :
- une partie de retenue du porte-boisson (1204), pour retenir un porte-boisson en position verticale, et
- une partie de montage (1201, 1600, 1700, 1800), destinée à être montée sur une structure de montage, dans laquelle la partie de retenue du porte-boisson (1204) et la partie de montage (1201, 1600, 1700, 800) sont montées pivotantes l'une par rapport à l'autre, de sorte que l'orientation d'un porte-boisson retenu par la partie de retenue du porte-boisson peut être ajustée par rapport à la partie de montage,
dans lequel la partie de retenue du porte-boisson (1204) peut pivoter librement par rapport à la partie de montage (1201, 1600, 1700, 1800), de sorte que la partie de retenue du porte-boisson pivote naturellement par rapport à la partie de montage lorsque l'orientation de la partie de montage est modifiée ;
dans laquelle la partie de retenue du porte-boisson (1204) comprend un anneau de support (1203) prévu autour d'un point central, l'anneau de support étant prévu sur un élément de support, et
dans lequel l'anneau de support (1203) présente un espace (1303) à travers un point circonférentiel de l'anneau de support.

2. Support de porte-boisson (1000) selon l'une quelconque des revendications précédentes, dans lequel la partie de montage (1201, 1600, 1700, 1800) comprend une première partie pour le montage sur la structure de montage (1201) et une deuxième partie (1600, 1700, 1800) montée de manière pivotante sur la partie de retenue du porte-boisson (1204), dans laquelle la deuxième partie est montée de manière à pourvoir se déplacer par translation sur la première partie.

3. Support de porte-boisson (1000) selon la revendication 2, dans lequel la deuxième partie (1600, 1700, 1800) est montée de manière rotative sur la première partie (1201).

4. Support de porte-boisson (1000) selon la revendication 2 ou 3, dans lequel la partie de montage comprend un rail (1900) et un patin correspondant (1803), coulissant le long du rail entre les positions rangée et déployée.

5. Support de porte-boisson (1000) selon l'une quelconque des revendications 2 à 4, dans lequel la partie de montage comprend un bras télescopique (1700) ayant un premier et un second sous-bras (1701, 1702) coulissant l'un par rapport à l'autre entre les configurations rétractées et étendues.

6. Support de porte-boisson (1000) selon l'une quelconque des revendications précédentes, dans lequel la partie de retenue du porte-boisson (1204) comprend un matériau élastique pour retenir le porte-boisson.

7. Support de porte-boisson (1000) selon l'une quelconque des revendications précédentes, dans lequel la partie de retenue du porte-boisson (1204) comprend un anneau monté à l'intérieur d'un anneau de la partie de montage (1201).

8. Support de porte-boisson (1000) selon la revendication 7, comprenant en outre une partie intermédiaire (1202) montée entre la partie de montage (1201) et la partie de retenue du porte-boisson (1204),
dans lequel la partie intermédiaire (1202) est montée de manière pivotante sur la partie de montage (1201) et également montée de manière pivotante sur la partie du porte-boisson (1204),
dans lequel la partie intermédiaire (1202) comprend un anneau monté à l'intérieur de l'anneau de la partie de montage (1201), et
dans lequel l'élément annulaire de la partie réceptrice du porte-boisson (1204) est monté à l'intérieur de l'élément annulaire de la partie intermédiaire.

9. Support de porte-boisson selon la revendication 10, lorsqu'il dépend de la revendication 7, dans lequel l'anneau de la partie de montage (1201) présente un espace à travers un point circonférentiel de l'anneau (1301).

10. Support de porte-boisson (1000) selon l'une quelconque des revendications précédentes, lorsqu'il dépend de la revendication 8, dans lequel l'anneau de la partie intermédiaire (1202) présente un espace à travers un point circonférentiel de l'anneau (1302).

11. Unité d'hébergement de passagers d'avion (100) comprenant un siège et un support de porte-boisson (1000) selon l'une quelconque des revendications précédentes.

12. Unité d'hébergement de passagers d'avion (100) selon la revendication 11, comprenant en outre une console (200) et dans laquelle le support de porte-boisson (1000) est monté sur la console.

13. Unité d'hébergement de passagers d'avion (100) selon la revendication 11, comprenant en outre une tablette de repas (1500) et dans laquelle le support de porte-boisson (1000) est monté sur la tablette de repas.
